# EUROPEAN PATENT APPLICATION

(11) **EP 2 806 186 A1**
(43) Date of publication of application: **26.11.2014**
(21) Application number: 13168814.5
(22) Date of filing: 22.05.2013
(51) Int. Cl.: F16F 15/32

(54) **An apparatus comprising a shaft and a compensator balancing sleeve for balancing the shaft**

(71) Applicant: Siemens Aktiengesellschaft, 80333 München (DE)
(72) Inventor: Knowles, Grahame, Lincoln, LN6 3LN (GB)
(74) Representative: McGowan, Nigel George

(57) **Abstract**

An apparatus comprising a shaft (1, 21, 71, 113) mounted for rotation and a compensator balancing sleeve (3, 23, 73) for balancing the shaft on rotation of the shaft, wherein the axes of the shaft and the compensator balancing sleeve are substantially concentric, wherein one end (5, 25, 75) of the compensator balancing sleeve is secured to the shaft so that the compensator balancing sleeve rotates with the shaft, wherein the remaining length of the compensator balancing sleeve is unencumbered to flex upon rotation of the shaft, characterised in that the compensator balancing sleeve is located internal to the shaft within a cavity (7, 27, 77) inside the shaft.

## Description

This invention relates to an apparatus comprising a shaft and a compensator balancing sleeve for balancing the shaft.

More particularly the invention relates to an apparatus comprising a shaft mounted for rotation and a compensator balancing sleeve for balancing the shaft on rotation of the shaft, wherein the axes of the shaft and the compensator balancing sleeve are substantially concentric, wherein one end of the compensator balancing sleeve is secured to the shaft so that the compensator balancing sleeve rotates with the shaft, wherein the remaining length of the compensator balancing sleeve is unencumbered to flex upon rotation of the shaft.

EP 2 226 529 A1, EP 2 568 194 A1, and European patent application no. 12 182 911.3 disclose high speed rotating shafts having balancing systems.

It is known to balance a rotating shaft by arranging for a compensator balancing sleeve of tubular form to surround and extend along the shaft. The compensator balancing sleeve balances the shaft by flexing or deflecting whilst the shaft is rotating. In order to overcome the problem that the compensator balancing sleeve is too stiff to flex or deflect sufficiently to provide the required balancing, axial slots are cut in the sleeve to reduce its stiffness, or the sleeve is reduced to two or more axially extending leaf springs. Whilst such measures provide dynamic functionality they can lead to the generation of high temperatures due to causing excessive air churning or windage losses. Further, the formation of the slots and leaf springs introduces areas of high stress in use.

According to the present invention there is provided an apparatus comprising a shaft mounted for rotation and a compensator balancing sleeve for balancing the shaft on rotation of the shaft, wherein the axes of the shaft and the compensator balancing sleeve are substantially concentric, wherein one end of the compensator balancing sleeve is secured to the shaft so that the compensator balancing sleeve rotates with the shaft, wherein the remaining length of the compensator balancing sleeve is unencumbered to flex upon rotation of the shaft, **characterised in that** the compensator balancing sleeve is located internal to the shaft within a cavity inside the shaft.

In an apparatus according to the preceding paragraph, it is preferable that the other end of the compensator balancing sleeve comprises a compensator balance ring, wherein trim balance holes for the fitment of trim balance masses are circumferentially spaced on the compensator balance ring.

In an apparatus according to the preceding paragraph but one, it is preferable that the compensator balancing sleeve comprises concentric radially inner and radially outer component compensator balancing sleeves, wherein one end of each of the component compensator balancing sleeves is secured to the shaft, wherein a predetermined level of imbalance is incorporated into each component compensator balancing sleeve, wherein the component compensator balancing sleeves are rotatable relative to one another about their common axis thereby to adjust the resultant balancing applied by the compensator balancing sleeve.

In an apparatus according to the preceding paragraph, it is preferable that the same predetermined level of imbalance is incorporated into each component compensator balancing sleeve.

In an apparatus according to the preceding paragraph, it is preferable that the other end of each of the component compensator balancing sleeves comprises a component compensator balance ring, wherein the same predetermined level of imbalance is incorporated into each component compensator balancing sleeve by the formation of holes in, or the fitment of trim balance masses to, the component compensator balance rings.

In an apparatus according to either of the preceding two paragraphs, it is preferable that said one ends of the component compensator balancing sleeves are exposed to the exterior of the shaft, and the component compensator balancing sleeves are rotatable relative to one another about their common axis by manipulation from the exterior of the shaft of their exposed one ends.

In an apparatus according to the preceding paragraph but five, it is preferable that said one end of the compensator balancing sleeve is secured to the shaft via a moveable joint for adjusting the angle of inclination of the axis of the compensator balancing sleeve.

In an apparatus according to the preceding paragraph, it is preferable that the moveable joint comprises a flexible neck or a spherical joint.

In an apparatus according to either of the preceding two paragraphs, it is preferable that a manually operable adjustment mechanism engages said one end of the compensator balancing sleeve for operating the moveable joint, wherein the adjustment mechanism is located in the shaft to be manually operable from the exterior of the shaft.

In an apparatus according to the preceding paragraph, it is preferable that the adjustment mechanism comprises circumferentially spaced, substantially radially extending adjustment screws.

In an apparatus according to either of the preceding two paragraphs but two, it is preferable that an electrically operable adjustment mechanism engages said one end of the compensator balancing sleeve for operating the moveable joint.

In an apparatus according to the preceding paragraph, it is preferable that the adjustment mechanism comprises circumferentially spaced, substantially radially extending adjustment screws, and respective electric actuators for turning the adjustment screws.

In an apparatus according to any one of the preceding six paragraphs, it is preferable that the other end of the compensator balancing sleeve comprises a compensator balance ring.

The invention will now be described, by way of example, with reference to the accompanying drawings, in which:
Fig 1 illustrates a first apparatus in accordance with the present invention;
Fig 2(a) illustrates a second apparatus in accordance with the present invention;
Fig 2(b) is a cross section on the line A-A in Fig 2(a);
Fig 2(c) is a force diagram showing centrifugal forces operating in the second apparatus;
Fig 3(a) illustrates a third apparatus in accordance with the present invention;
Fig 3(b) illustrates a modification to the third apparatus; and
Fig 4 illustrates a fourth apparatus in accordance with the present invention.

Advantage can be gained by installing a compensator balancing sleeve internally of shafts that are partially or fully hollow.

Many drive shafts are designed to be of tubular or hollow construction in order to save weight, e.g. high speed coupling shafts, and consequently such shafts are suitable candidates for internal compensation. When a compensator balancing sleeve is installed internally, its minimum diameter is no longer limited by the diameter of the drive shaft and so can be reduced as required so the sleeve has the lower bending stiffness necessary for dynamic purposes. This obviates the need for axial slots or axially extending leaf springs, and consequently saves manufacturing cost and avoids the introduction of areas of high stress in use. Further advantages include a reduction in the half mass of the compensator assembly and the elimination of the above noted windage losses (note, in some applications windage losses can be excessive even where the compensator balancing sleeve does not include slots).

The principle of internally installing a compensator balancing sleeve can be applied to any flexible drive train component that is partially or fully hollow. In the first to fourth apparatus in accordance with the present invention described below, the example of a coupling spacer tube is taken as such type of component, for manufacturing reasons, is a common source of residual unbalance.

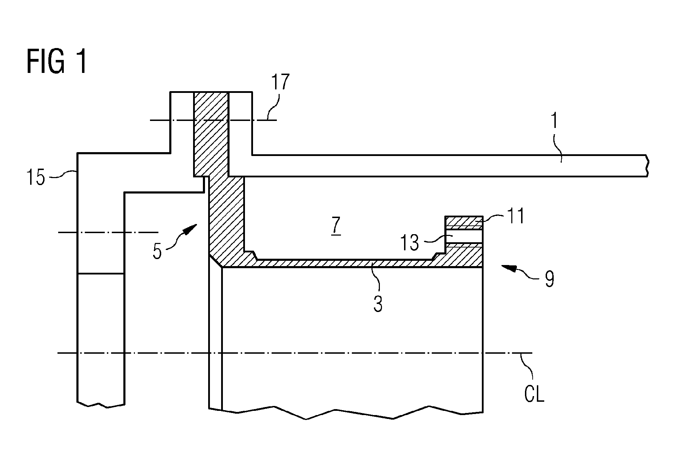

Referring to Fig 1, the first apparatus in accordance with the present invention comprises a coupling spacer tube 1 mounted for rotation and a compensator balancing sleeve 3 for balancing the tube 1 on rotation of the tube. The axes of the coupling spacer tube 1 and the compensator balancing sleeve 3 are concentric, see centreline CL. One end 5 of the compensator balancing sleeve 3 is secured to the coupling spacer tube 1 so that the sleeve rotates with the tube. The remaining length of the compensator balancing sleeve 3 is unencumbered to flex upon rotation of the coupling spacer tube 1. The compensator balancing sleeve 3 is located internal to the coupling spacer tube 1 within the hollow 7 of the tube. The other end 9 of the compensator balancing sleeve 3 comprises a compensator balance ring 11. Trim balance holes 13 for the fitment of trim balance masses are circumferentially spaced on the compensator balance ring 11. The compensator balancing sleeve 3 is of single piece construction and so is of low cost. It is assembled between faces of a drive flange 15 and the coupling spacer tube 1, and is securely clamped by associated circumferentially spaced bolt fasteners 17.

The balancing moment applied by the compensator balancing sleeve 3 (centrifugal force times the length of the sleeve) is adjusted by varying the size of the trim balance mass fitted into the appropriate trim balance hole 13 (the centrifugal force is directly proportional to this mass). Alternatively, adjustment can be made by substituting a compensator balancing sleeve 3 of different length.

The first apparatus in accordance with the present invention has the advantages of lower bending stiffness, lower half mass, and the elimination of windage losses, however, it has the disadvantage that it requires the removal of the coupling spacer tube 1 from the drive train whenever balance adjustment is required. Nevertheless, in many installations balance adjustment is required only infrequently, so for these installations the advantages outweigh the disadvantage.

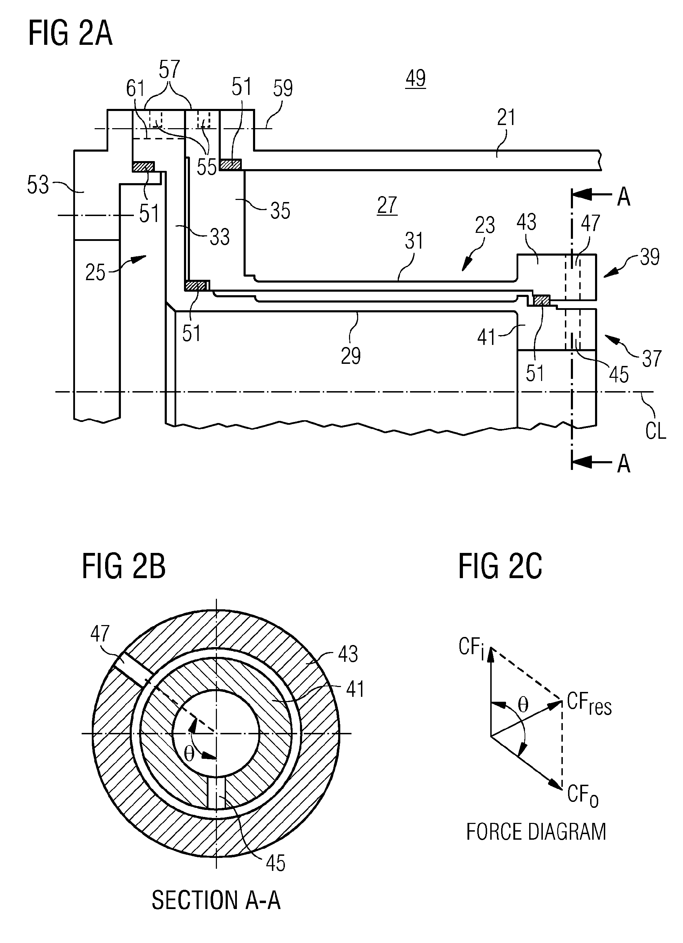

Referring to Figs 2(a), 2(b) and 2(c), the second apparatus in accordance with the present invention comprises a coupling spacer tube 21 mounted for rotation and a compensator balancing sleeve 23 for balancing the coupling spacer tube 21 on rotation of the tube. The axes of the coupling spacer tube 21 and the compensator balancing sleeve 23 are concentric, see centreline CL. One end 25 of the compensator balancing sleeve 23 is secured to the coupling spacer tube 21 so that the sleeve rotates with the tube. The remaining length of the compensator balancing sleeve 23 is unencumbered to flex upon rotation of the coupling spacer tube 21. The compensator balancing sleeve 23 is located internal to the coupling spacer tube 21 within the hollow 27 of the tube.

The compensator balancing sleeve 23 comprises concentric radially inner and radially outer component compensator balancing sleeves 29, 31. One end 33, 35 of each of the component compensator balancing sleeves 29, 31 is secured to the coupling spacer tube 21. The same predetermined level of imbalance is incorporated into each component compensator balancing sleeve 29, 31 (further explanation regarding this is given below). The component compensator balancing sleeves 29, 31 are rotatable relative to one another about their common axis CL thereby to adjust the resultant balancing applied by the compensator balancing sleeve 23 (again, further explanation regarding this is given below).

The other end 37, 39 of each of the component compensator balancing sleeves 29, 31 comprises a component compensator balance ring 41, 43. It is mentioned above that the same predetermined level of imbalance is incorporated into each component compensator balancing sleeve 29, 31. This is done by the machining of a radially extending hole 45, 47 in each of the component compensator balance rings 41, 43. Alternatively, it could be done by the fitment of a trim balance mass to each of the component compensator balance rings 41, 43.

The one ends 33, 35 of the component compensator balancing sleeves 29, 31 are exposed to the exterior 49 of the coupling spacer tube 21, and the component compensator balancing sleeves 29, 31 are rotatable relative to one another about their common axis CL by manipulation of their exposed one ends 33, 35 from the exterior 49 of the coupling spacer tube 21 (further explanation below).

The machining of radially extending holes 45, 47 removes mass from the component compensator balance rings 41, 43. Similarly, the alternative of fitting trim balance masses adds mass to the component compensator balance rings 41, 43. Imbalance is equal to the mass removed or added times its centroid radius about the axis of rotation CL. Thus, it can be seen that it is straightforward to incorporate the same imbalance into each of the component compensator balance rings 41, 43. Whether mass is removed or added, imbalance is produced separately in each of the radially inner and radially outer component compensator balance rings 41, 43. This imbalance is denoted by CFi and CFo in Fig 2 (c) (note, since Fig 2(c) relates to the case where mass has been removed, the centroid of each balance ring 41, 43 moves to be diametrically opposite to the position of the hole 45, 47 in the ring and the CF of the ring is 180° out of phase with the hole). The vector addition of CFi and CFo is the resultant CFres. CFres including its magnitude is a function of the included angle θ between CFi and CFo and varies between 0 when θ = 180° and CFi + CFo when θ = 0°.

Low friction bearing bushes 51 (not essential) are incorporated: (i) at the interface between the radially inner and radially outer component compensator balancing sleeves 29, 31; (ii) at the mating spigot of the one end 33 of the radially inner component compensator balancing sleeve 29 with a drive flange 53; and (iii) at the mating spigot of the one end 35 of the radially outer component compensator balancing sleeve 31 with the coupling spacer tube 21. The bearing bushes 51 allow easy angular adjustment of the angle θ by the application of C-spanners to a series of equally spaced holes 55 machined into radially outwardly directed faces 57 of the one ends 33, 35 of the component compensator balancing sleeves 29, 31, see Fig 2(a). Adjustment requires removal of bolt fasteners 59 to relax the joint and allow rotation at the mating spigots, but it is not necessary to remove the coupling spacer tube 21 from the drive shaft assembly. The degree of adjustment is limited to index positions set by the arcuate length of the circumferential pitch of the holes for the bolt fasteners 59, but the diameter of the radially outwardly directed face 57 of the one end 33 of the radially inner component compensator balancing sleeve 29 can, if required, be reduced to provide infinitely variable adjustment of the angle θ, while maintaining sufficient radial engagement to ensure adequate joint tightness upon reassembly of the bolt fasteners 59, see dashed line 61 in Fig 2(a). The angular position of the combined imbalance CFres relative to the coupling spacer tube 21 is determined by the appropriate angular assembly of the component compensator balancing sleeves 29, 31 between the coupling spacer tube 21 and the drive flange 53. Axial graduation marks scribed into the radially outwardly directed faces 57 can assist in the correct setting of both the magnitude of CFres and its external phase position.

The close fitting radial assembly of the radially inner and outer component compensator balancing sleeves 29, 31 ensures that their lateral bending stiffness' act in parallel with one another, creating a combined bending stiffness equal to the sum of the individual stiffness'. Since the minimum stiffness of the compensator balancing sleeve 23 is no longer limited by the diameter of the coupling spacer tube 21, it is straightforward to ensure that the combined stiffness of the inner and outer component compensator balancing sleeves 29, 31 is not excessive and meets dynamic requirements.

The second apparatus in accordance with the present invention provides simple, precise, external adjustment of the balancing moment applied by an internal compensator balancing sleeve. The second apparatus maintains the main advantages of the first apparatus in accordance with the present invention, i.e. lower bending stiffness and the elimination of windage losses, but does not have the disadvantage of the first apparatus that the coupling spacer tube requires removal whenever balance adjustment is required.

It is to be noted that in the second apparatus it is only preferable that the same predetermined level of imbalance is incorporated into each component compensator balancing sleeve 29, 31. In this regard, if, for example, CFi is larger than CFo, then it would be possible to adjust CFres between the values CFi-CFo at θ=180° and CFi+CFo at θ=0°, which might be acceptable for some applications provided CFi-CFo is not too large.

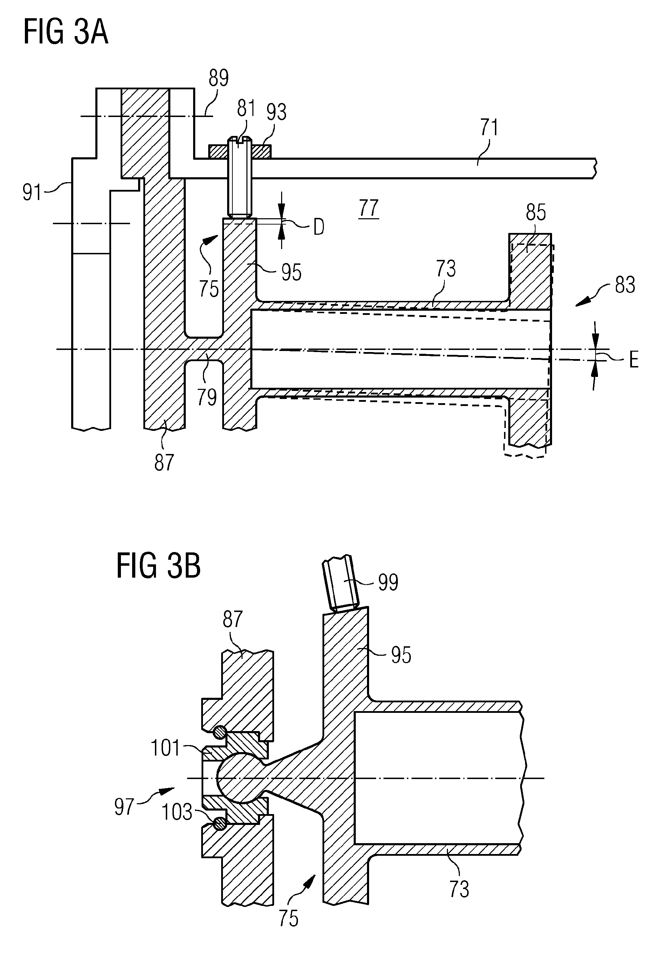

Referring to Fig 3(a), the third apparatus in accordance with the present invention comprises a coupling spacer tube 71 mounted for rotation and a compensator balancing sleeve 73 for balancing the coupling spacer tube 71 on rotation of the tube. The axes of the coupling spacer tube 71 and the compensator balancing sleeve 73 are substantially concentric (further regarding this below). One end 75 of the compensator balancing sleeve 73 is secured to the coupling spacer tube 71 so that the sleeve rotates with the tube. The remaining length of the compensator balancing sleeve 73 is unencumbered to flex upon rotation of the coupling spacer tube 71. The compensator balancing sleeve 73 is located internal to the coupling spacer tube 71 within the hollow 77 of the tube.

The one end 75 of the compensator balancing sleeve 73 is secured to the coupling spacer tube 71 via a flexible neck 79. Located in the wall of the coupling spacer tube 71 are three or more circumferentially spaced, radially extending adjustment screws 81 with corresponding locknuts 93 (or similar locking devices). The adjustment screws 81 engage the one end 75 of the compensator balancing sleeve 73. The other end 83 of the compensator balancing sleeve 73 comprises a compensator balance ring 85.

In the third apparatus, the position of the centroid of the compensator balance ring 85 is adjusted by varying the angle of inclination of the axis of the compensator balancing sleeve 73. A compensator end plate 87 is clamped by bolt fasteners 89 between the coupling spacer tube 71 and a drive flange 91. The flexible neck 79 is attached to the compensator end plate 87. Balance adjustment is made by using the radially extending adjustment screws 81 to apply a vectored force to a compensator adjustment ring 95 which comprises the one end 75 of the compensator balancing sleeve 73. This induces a slight bending in the flexible neck 79 and consequentially angular displacement in the axis of the compensator balancing sleeve 73. By releasing of the adjustment screws 81 opposing movement and appropriate tightening of the other adjustment screws 81, a radial displacement D can be infinitely varied in both magnitude and phase position. The required radial displacement D is locked in position by retightening the remaining adjustment screws 81. Radial displacement D produces a displacement E of the centroid of the compensator balance ring 85 (i.e. eccentricity of the mass of the compensator balance ring 85) proportional to D. Displacement E creates, upon rotation of the coupling spacer tube 71, a trim balance centrifugal force together with a corrective balancing sleeve moment. Application to the coupling spacer tube 71 is via the compensator end plate 87 and the adjustment screws 81. The setting of the required static eccentricity E (note, this is amplified on rotation by deflection of the compensator balancing sleeve 73) can be assisted by making measurements of the height of the adjustment screws 81 above the outer surface of the coupling spacer tube 71, or by specifying a set number of adjustment screw turns that translates into a given eccentricity E.

The modification to the third apparatus illustrated in Fig 3(b) caters for the possibility that the flexible neck 79 produces high stress or dynamic problems. The flexible neck 79 is replaced by a spherical joint 97. In addition, the adjustment screws 81 are replaced by adjustment screws 99 that are inclined by a small angle so as to impart, after tightening, an axial force on the spherical joint 97 to firmly bias the clearance in the joint into a locked state to the right hand side in Fig 3(b). In the spherical joint 97, a collet 101 is split into two halves, to facilitate assembly, and held in place by a circlip 103.

The third apparatus offers the same advantages as the second apparatus but is possibly less complex. The third apparatus may better suit certain particular drive train layouts.

The third apparatus illustrated in Fig 3(a) has high gain since a very small movement of the compensator adjustment ring 95 produces a relatively large displacement of the compensator balance ring 85. It also has a high stiffness since the adjustment screws 81 together with corresponding locknuts 93 prevent backward travel of the compensator adjustment ring 95. These features, together with the amplification benefits of the compensator balancing sleeve 73, are suited to non-manual adjustment. These characteristics, namely a mechanism that requires a relatively high operating force, but with small, precise displacement and provides a firmly locked stable state after adjustment is completed, are features that are compatible with a large range of electric actuators. Many devices, such as piezoelectric actuators, proportional servos/solenoids and miniature electric motors, some with brakes, have these required features and consequently would be useful in designs for electric actuation, and hence offer the prospect of enabling remote trim balancing adjustment.

Miniature, permanent magnet, stepper motors are ideal candidates for remote actuation as their characteristics include high torque, precise stepping angular rotation/displacement, and a relatively high holding torque in the un-energised state, together with low cost and small proportions. They also benefit from low power consumption that can easily be supplied by non-contacting, inductive means to a rotating shaft.

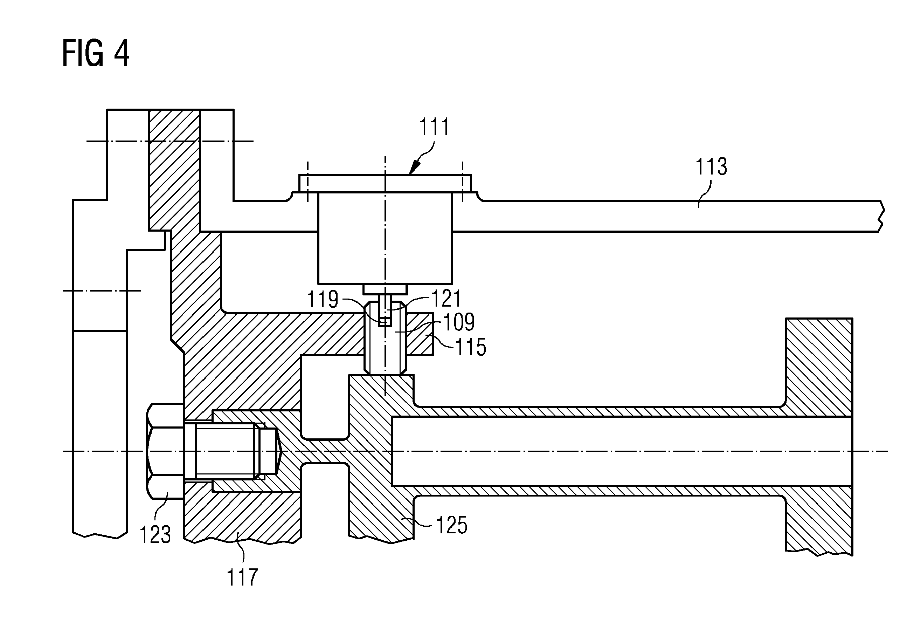

The fourth apparatus in accordance with the present invention illustrated in Fig 4 includes the use of stepper motors. The fourth apparatus is based on the third apparatus illustrated in Fig 3(a). In the fourth apparatus, adjustment screws 109, corresponding to adjustment screws 81 in Fig 3(a), are activated by miniature, permanent magnet stepper motors 111. The stepper motors 111 are located in the wall of coupling spacer tube 113, and the adjustment screws 109 are located in an axial extension 115 of compensator end plate 117. The shaft ends 119 of the stepper motors 111 have been modified to engage the drive slot/socket 121 of the adjustment screws 109, so as to allow either release or tightening of the screws upon either positive or negative electrical energising of the motors. This enables trim balance and moment adjustment to occur as per the procedure described above for the third apparatus of Fig 3(a). To ease manufacture and facilitate assembly, the compensator end plate 117 has been split into two component parts held together by a retaining bolt 123. The principle of operation is the same as that of the third apparatus of Fig 3(a). Following final balance adjustment, the adjustment screws 109 can again be tightened to lock compensator adjustment ring 125 firmly in place. The adjustment screws 109 are then secured by the holding torque provided by the stepper motors 111, upon their de-energising.

Since many modern drive trains are already remotely monitored for bearing vibration and balance condition, the possibility of remote balance adjustment is considered an advantageous and desirable additional feature. The fourth apparatus therefore offers the prospect of reducing the frequency or time duration of site visits, thereby reducing maintenance costs and hence increasing the attractiveness of long term maintenance contracts.

## Claims

1. An apparatus comprising a shaft (1, 21, 71, 113) mounted for rotation and a compensator balancing sleeve (3, 23, 73) for balancing the shaft on rotation of the shaft, wherein the axes of the shaft and the compensator balancing sleeve are substantially concentric, wherein one end (5, 25, 75) of the compensator balancing sleeve is secured to the shaft so that the compensator balancing sleeve rotates with the shaft, wherein the remaining length of the compensator balancing sleeve is unencumbered to flex upon rotation of the shaft, **characterised in that** the compensator balancing sleeve is located internal to the shaft within a cavity (7, 27, 77) inside the shaft.

2. An apparatus according to claim 1 wherein the other end (9) of the compensator balancing sleeve (3) comprises a compensator balance ring (11), wherein trim balance holes (13) for the fitment of trim balance masses are circumferentially spaced on the compensator balance ring.

3. An apparatus according to claim 1 wherein the compensator balancing sleeve (23) comprises concentric radially inner and radially outer component compensator balancing sleeves (29, 31), wherein one end (33, 35) of each of the component compensator balancing sleeves is secured to the shaft (21), wherein a predetermined level of imbalance is incorporated into each component compensator balancing sleeve, wherein the component compensator balancing sleeves are rotatable relative to one another about their common axis thereby to adjust the resultant balancing applied by the compensator balancing sleeve.

4. An apparatus according to claim 3 wherein the same predetermined level of imbalance is incorporated into each component compensator balancing sleeve.

5. An apparatus according to claim 4 wherein the other end (37, 39) of each of the component compensator balancing sleeves (29, 31) comprises a component compensator balance ring (41, 43), wherein the same predetermined level of imbalance is incorporated into each component compensator balancing sleeve by the formation of holes (45, 47) in, or the fitment of trim balance masses to, the component compensator balance rings.

6. An apparatus according to claim 4 or claim 5 wherein said one ends (33, 35) of the component compensator balancing sleeves (29, 31) are exposed to the exterior (49) of the shaft (21), and the component compensator balancing sleeves are rotatable relative to one another about their common axis by manipulation from the exterior of the shaft of their exposed one ends.

7. An apparatus according to claim 1 wherein said one end (75) of the compensator balancing sleeve (73) is secured to the shaft (71, 113) via a moveable joint (79, 97) for adjusting the angle of inclination of the axis of the compensator balancing sleeve.

8. An apparatus according to claim 7 wherein the moveable joint (79, 97) comprises a flexible neck (79) or a spherical joint (97).

9. An apparatus according to claim 7 or claim 8 wherein a manually operable adjustment mechanism (81, 93, 99) engages said one end (75) of the compensator balancing sleeve (73) for operating the moveable joint (79, 97), wherein the adjustment mechanism is located in the shaft (71) to be manually operable from the exterior of the shaft.

10. An apparatus according to claim 9 wherein the adjustment mechanism (81, 93, 99) comprises circumferentially spaced, substantially radially extending adjustment screws (81, 99).

11. An apparatus according to claim 7 or claim 8 wherein an electrically operable adjustment mechanism (109, 111) engages said one end of the compensator balancing sleeve for operating the moveable joint.

12. An apparatus according to claim 11 wherein the adjustment mechanism (109, 111) comprises circumferentially spaced, substantially radially extending adjustment screws (109), and respective electric actuators (111) for turning the adjustment screws.

13. An apparatus according to any one of claims 7 to 12 wherein the other end (83) of the compensator balancing sleeve (73) comprises a compensator balance ring (85).
